**Europäisches Patentamt**

**European Patent Office**

**Office européen des brevets**

(19)

(11) Veröffentlichungsnummer: **0 300 963 B1**

# EUROPÄISCHE PATENTSCHRIFT

(12)

(45) Veröffentlichungstag der Patentschrift :
20.03.91 Patentblatt 91/12

(51) Int. Cl.$^5$: **E04D 13/04, F16L 5/02**

(21) Anmeldenummer : **88810471.8**

(22) Anmeldetag : **07.07.88**

(54) **Installationselement, insbesondere für einen Ablauftrichter oder eine Rohrdurchführung.**

(30) Priorität : **24.07.87 CH 2842/87**

(43) Veröffentlichungstag der Anmeldung :
**25.01.89 Patentblatt 89/04**

(45) Bekanntmachung des Hinweises auf die
Patenterteilung :
**20.03.91 Patentblatt 91/12**

(84) Benannte Vertragsstaaten :
**AT BE DE ES FR IT NL SE**

(56) Entgegenhaltungen :
**EP-A- 0 145 012**
**DE-A- 2 612 684**
**DE-A- 3 516 657**
**DE-B- 2 422 658**

(73) Patentinhaber : **Geberit AG**
**Schachenstrasse 77**
**CH-8645 Jona (CH)**

(72) Erfinder : **Häsler, Heinz**
**Oberseestrasse 90**
**CH-8645 Jona (CH)**
Erfinder : **Keller, Franz**
**Wiesenstrasse 12**
**CH-8640 Rapperswil (CH)**

(74) Vertreter : **Groner, Manfred et al**
**Patentanwalts-Bureau Isler AG Postfach 6940**
**CH-8023 Zürich (CH)**

## Beschreibung

Die Erfindung betrifft ein Installationselement nach dem Oberbegriff des Anspruchs 1. Ein solches Installationselement ist durch die DE-A-35 16 657 bekannt geworden. Bei diesem weist die Folie als Halter mehrere Ausbrüche auf, die während des Giessens eine Verankerung ergeben. Auch bei diesem Installationselement ist die Lage des inneren Randes der Folie weitgehend unbestimmt und besteht auch hier das Risiko, dass durch einen ungünstigen Verlauf der Folie im Körper das Element geschwächt oder undicht ist. Durch die deutsche Gebrauchsmusterschrift Nr. 69 17 986 ist ein Installationselement bekannt, bei dem die Folie an einem Kunststoffkörper überlappend angeschweisst, stumpf angeschweisst oder in den Körper eingeschweisst. Weiter zeigt die deutsche Gebrauchsmusterschrift Nr. 71 29 090 einen Ablauftrichter zur Entwässerung von Flachdächern, Terrassen oder Balkonen, bei welchen die Folie am Rand einer Ausstanzung abgebogen in den Trichterflansch eingebettet ist und zugleich vom Austritt aus dem Flanschkörper bis zur Flanschaussenkante mit der Oberfläche des Flansches fest verbunden ist. Ein ähnlicher Ablauftrichter ist durch die DE-OS 2 035 199 bekanntgeworden, bei welchem die Folie zur besseren Haftung im Flanschbereich Ausnehmungen aufweist. Zur besseren Verankerung der Folie ist diese an ihrem inneren Rand rechtwinklig abgebogen in den Trichterflansch eingebettet. Bei diesen Ablauftrichtern besteht die Gefahr, dass die Folie an der Knickstelle bricht und ungenügend im Ablaufkörper verankert ist. Auch ist die Lage des inneren Randes der Folie jeweils weitgehend unbestimmt und kann dazu führen, dass der Ablauftrichter durch einen ungünstigen Verlauf der Folie geschwächt ist oder leicht undicht wird.

Der Erfindung liegt die Aufgabe zugrunde ein Installationselement der eingangs genannten Art zu schaffen, bei dem eine dauerhafte und feuchtigkeitsdichte Befestigung der Folie gewährleistet ist und die ohne hohen Materialverbrauch in einfacher Weise hergestellt werden kann. Die Aufgabe wird durch die Erfindung gemäss Anspruch 1 gelöst.

Die Distanzhalter verankern einerseits die Folie im Körper und gewährleisten anderseits, dass diese im Körper die gewünschte Position einnimmt. Mit Hilfe der Distanzhalter kann somit der Verlauf der Folie im Körper kontrolliert werden. Dadurch kann der Körper dort, wo die Folie eingebettet ist, mit optimal kleiner Wandstärke gebaut werden, wodurch Material eingespart werden kann. Im Gegensatz zum Ablauf nach der DE-PS 24 37 191, bei welchem der Ablaufkörper aus Polyurethanschaum und die Folie aus Vinylacetatäthylen bestehen muss, kann beim erfindungsgemässen Installationselement die Folie auch aus einem Textilgewebe oder aus Papier bestehen.

Bei einem Körper mit Flansch ist die Folie vorzugsweise bis zur Aussenkante des Flansches eingebettet und liegt bei etwa gleichen Abständen zu den Flanschoberflächen im wesentlichen flach, so dass auch bei geringer Stärke des Flansches eine gute Dichtigkeit und Festigkeit erreicht werden kann.

Eine besonders gute Verankerung der Folie ergibt sich dann, wenn die Distanzhalter Durchbrüche und/oder Einbuchtungen aufweisen. Durch den Verbund von Folie und Distanzhaltern wird eine Art Armierung gebildet, welche den Flansch verstärkt.

Die Distanzhalter können alle gleich ausgebildet sein und sind vorzugsweise bezüglich der Folienebene spiegelsymmetrisch, so dass sie nicht falsch eingesetzt werden können.

Eine einfache Montage der Distanzhalter ergibt sich dann, wenn diese unter Rastung in Durchbrüche in der Folie ein gesetzt werden.

Ausführungsbeispiele der Erfindung werden nachfolgend anhand der Zeichnung näher erläutert. Es zeigen :

Fig. 1 einen Schnitt durch einen Folienring für einen Wasserablauf,

Fig. 2 eine Draufsicht auf eine Folie,

Fig. 3 einen Schnitt durch einen Distanzhalter,

Fig. 4 eine Ansicht des Distanzhalters in Achsrichtung gesehen, und

Fig. 5 eine Seitenansicht eines teilweise geschnittenen Folienrings für eine Rohrdurchführung.

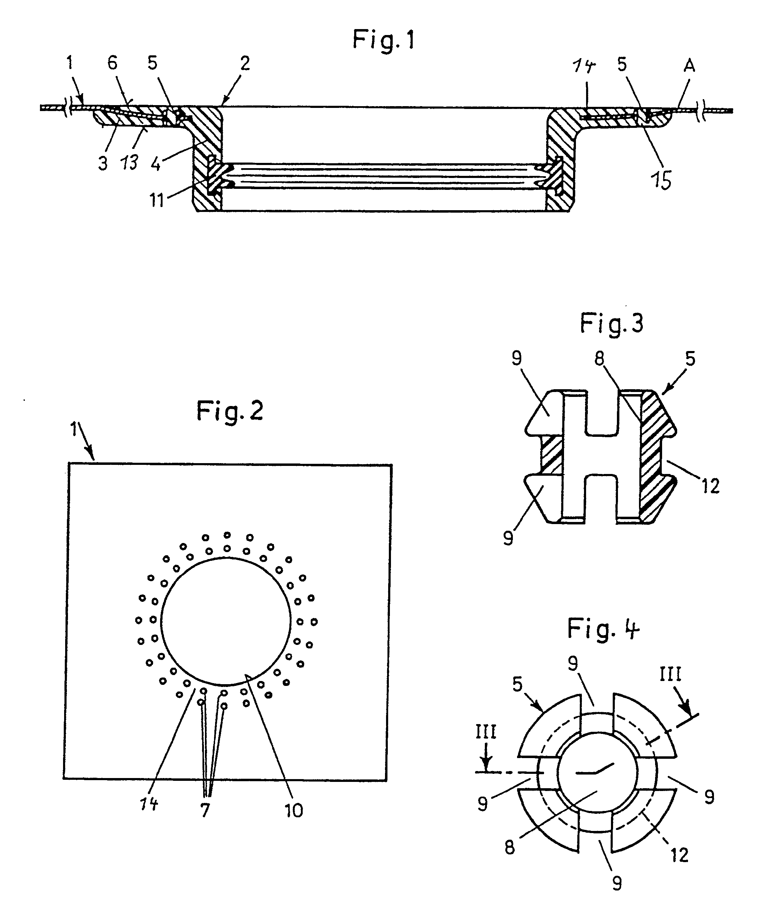

Der in Fig. 1 gezeigte Folienring weist einen Körper 2 mit einem Flansch 3 und einem Stutzen 4 auf. Der Folienring wird in einen Einlauftrichter eingesetzt oder dient als Aufstockelement für einen zwei-etagigen Wasserablauf. Mittels einer Lippendichtung 11 kann der Folienring gegen ein hier nicht gezeigtes Einsatzrohr abgedichtet werden.

Die Ausbildung des Stutzens 4 ist nicht wesentlich, vielmehr kann dieser auch mit dem Einlauftrichter eine Einheit bilden. Der Körper 2 besteht vorzugsweise aus einem wärmedämmenden Kunststoffschaum, beispielsweise aus PUR.

In den Flansch 3 ist eine Folie 1 eingeschäumt, die mit einer hier nicht gezeigten Dachhaut verschweisst oder verklebt wird. Wie die Fig. 2 zeigt, weist die quadratische Folie mittig eine kreisrunde Ausstanzung 10 auf. Im Randbereich 14 dieser Ausstanzung 10 besitzt die Folie 1 mehrere in Kreisen angeordnete kreisrunde Durchbrüche 7. In jedem Durchbruch 7 ist ein Distanzhalter 5 eingesetzt, der aus einem geeigneten Metall oder Kunststoff, beispielsweise Polypropylen besteht.

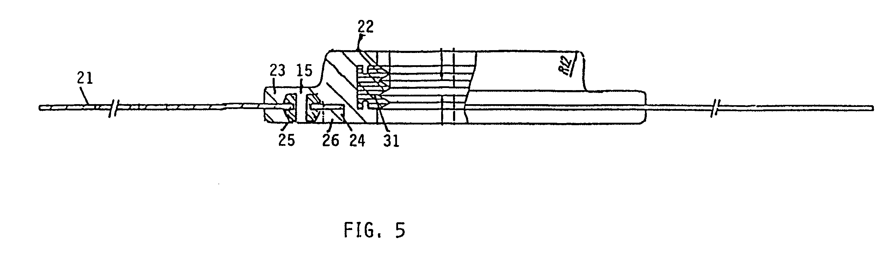

Wie die Fig. 3 und 4 zeigen, sind die Distanzhalter 5 bezüglich der Folienebene spiegelsymmetrisch und bezüglich einer senkrecht dazu stehenden Achse drehsymmetrisch. Die Distanzhalter 5 weisen am Umfang eine kreisförmige Einbuchtung 12 auf, in welche die Folie 1 einrastend eingreift. Ferner besitzen die Distanzhalter 5 mehrere Einbuchtungen 9, die mit einem axialen Durchbruch 8 verbunden sind. Die Höhe der Distanzhalter richtet sich nach der Stärke des Flansches 3. Die Höhe der Distanzhalter 5 ist vorzugsweise etwas kleiner als die Stärke des Flansches 3. Beträgt die genannte Stärke 10 mm, so sind die Distanzhalter beispielsweise 8,5 mm hoch.

Bei der Herstellung des Folienrings wird die mit den Distanzhaltern 5 bestückte Folie 1 in das Formwerkzeug eingelegt, an der Stelle A fixiert und im Bereich des Flansches vollständig eingeschäumt, wobei die Distanzhalter 5 dafür sorgen, dass die Folie 1 im gewünschten Bereich nicht näher als etwa die halbe Höhe der Distanzhalter 5 an die Oberflächen 6 bzw. 13 des Flansches 3 herantreten. Wie die Fig. 1 zeigt, sind die Distanzhalter 5 entweder oben oder unten vollständig von einer Schicht 15 überdeckt. Die Schicht 15 ist mit dem in den Durchbruch 8 und die Einbuchtung 9 eingedrungenen Kunststoff verbunden. Damit ergibt sich eine gute Verankerung der Distanzelemente 5 und damit der Folie 1.

Wie die Fig. 1 deutlich zeigt, liegt die Folie 1 im Bereich des Flansches 3 weitgehend flach und ist an der Austrittsstelle bündig mit der Fläche 6. Diese Bündigkeit ist wichtig, da sich ansonst am Rande des Flansches 3 Flüssigkeit ansammeln kann, was in der Regel nach einiger Zeit zu einer Geruchsbelästigung führt.

Als weiteres Beispiel für ein erfindungsgemässes Installationselement zeigt die Fig. 5 einen Folienring für eine Rohrdurchführung. Dieser weist ebenfalls einen Körper 22 mit einem Flansch 23 auf, in den eine Folie 21 im Bereich des inneren Randes 24 eingeschäumt ist. Die Distanzhalter 25 sind auf einem einzigen Kreis angeordnet und bestimmen den Abstand der Folie 21 zur Oberfläche 26. Der Folienring wird mit einer Dichtung 31 gegen ein hier nicht gezeigtes Rohr abgedichtet.

## Ansprüche

1. Installationselement, insbesondere für einen Ablauftrichter zur Boden- oder Dachentwässerung oder für eine Rohrdurchführung, mit einem aus Kunststoff geformten Körper (2 ; 22) und einer elastischen Folie (1 ; 21), die am Rand (14 ; 24) einer Ausstanzung (10) in den Körper (2 ; 22) eingeformt ist, mit einer Mehrzahl in den Körper (2 ; 22) eingebettete und an der Folie (1 ; 21) befestigte Halter, dadurch gekennzeichnet, dass die Halter als Distanzhalter (5; 25) ausgebildet sind, welche die Folie (1 ; 21) seitlich überragen und dadurch bei der Einformung der Folie (1 ; 21) in den Körper (2 ; 22) die minimalen seitlichen Abstände der Folie (1 ; 21) zu den Seitenflächen (6, 13 ; 26) des Körpers (2 ; 22) bestimmen und die Folie (1 ; 21) im Körper (2 ; 22) verankern.

2. Installationselement nach Anspruch 1, dadurch gekennzeichnet, dass die Folie (1 ; 21) bis zum äusseren Rand eines Flansches (3 ; 23) im wesentlichen flach und mit etwa gleichen Abständen zu den Flanschoberflächen (6,13 ; 26) eingebettet ist.

3. Installationselement nach Anspruch 1 oder 2, dadurch gekennzeichnet, dass die Distanzhalter (5 ; 25) wenigstens auf einer Seite der Folie (1 ; 21) vom Werkstoff des Körpers (2 ; 22) vollständig überdeckt sind.

4. Installationselement nach einem der Ansprüche 1 bis 3, dadurch gekennzeichnet, dass die Distanzhalter (5 ; 25) vom Werkstoff des Körpers (2 ; 22) ausgegossene Durchbrüche (8) und/oder Einbuchtungen (9) aufweisen.

5. Installationselement nach einem der Ansprüche 1 bis 4, dadurch gekennzeichnet, dass die Distanzhalter (5 ; 25) bezüglich der Folienebene spiegelsymmetrisch und bezüglich einer quer zur Folienebene gestellten Achse drehsymmetrisch ausgebildet sind.

6. Installationselement nach einem der Ansprüche 1 bis 5, dadurch gekennzeichnet, dass die Distanzhalter (5 ; 25) in Durchbrüche (7) der Folie (1; 21) eingesetzt sind.

7. Installationselement nach einem der Ansprüche 2 bis 6, dadurch gekennzeichnet, dass die Folie (1 ; 21) an ihrem Austritt aus dem Flansch zu einer Seitenfläche (6) des Flansches bündig ist.

## Claims

1. Installation element, in particular for a drain pipe for removing water from the ground or from a roof or for a pipe connection, having a body (2 ; 22) formed from plastic, and an elastic film (1 ; 21) which is moulded into the body (2 ; 22) at the edge (14 ; 24) of a punched-out hole (10), having a plurality of retainers embedded in the body (2 ; 22) and fastened to the film (1 ; 21), characterised in that the retainers are designed as spacing retainers (5 ; 25) which project laterally from the film (1 ; 21) and thus determine the minimum lateral distances of the film (1 ; 21) from the side faces (6, 13 ; 26) of the body (2 ; 22) when the film (1 ; 21) is moulded into the body (2 ; 22), and anchor the film (1 ; 21) in the body (2 ; 22).

2. Installation element according to Claim 1, characterised in that the film (1 ; 21) is embedded, up to the outer edge of a flange (3 ; 23), essentially flat and at approximately the same distances from the flange surfaces (6, 13 ; 26).

3. Installation element according to Claim 1 or 2, characterised in that the spacing retainers (5 ; 25) are completely covered on at least one side of the film (1 ; 21) by the material of the body (2 ; 22).

4. Installation element according to one of Claims 1 to 3, characterised in that the spacing retainers (5 ; 25) have openings (8) and/or indentations (9) compound-filled with the material of the body (2 ; 22).

5. Installation element according to one of Claims 1 to 4, characterised in that the spacing retainers (5 ; 25) are designed to be mirror-symmetrical with respect to the plane of the film, and to be symmetrical in rotation with respect to an axis set transverse to the plane of the film.

6. Installation element according to one of Claims 1 to 5, characterised in that the spacing retainers (5 ; 25) are inserted in openings (7) of the film (1 ; 21).

7. Installation element according to one of Claims 2 to 6, characterised in that where it emerges from the flange, the film (1 ; 21) is flush with a side face (6) of the flange.

ments (7) de la feuille (1 ; 21).

7. Elément d'installation selon l'une des revendications 2 à 6, caractérisé en ce que la feuille (1 ; 21) affleure avec une face latérale (6) de la bride, à sa sortie de la bride.

**Revendications**

1. Elément d'installation, en particulier pour une goulotte d'écoulement pour évacuer l'eau du sol ou d'un toit, ou pour un raccordement tubulaire, comportant un corps moulé (2 ; 22) en matière synthétique et une feuille élastique (1 ; 21) qui, sur le bord (14 ; 24) d'une perforation (10), est moulée au corps (2 ; 22), comportant une série d'éléments de maintien insérés dans le corps et fixés à la feuille (1 ; 21), caractérisé en ce que les éléments de maintien sont réalisés sous la forme d'éléments d'écartement (5 ; 25) qui dépassent la feuille (1 ; 21) latéralement et, par conséquent, pendant le moulage de la feuille (1 ; 21) dans le corps (2 ; 22), définissent les écarts latéraux minimaux entre la feuille (1 ; 21) et les parois latérales (6, 13 ; 26) du corps (2 ; 22) et ancrent la feuille (1 ; 21) dans le corps (2 ; 22).

2. Elément d'installation selon la revendication 1, caractérisé en ce que la feuille (1 ; 21) est insérée de manière essentiellement plane jusqu'au bord extérieur d'une bride (3 ; 23) et selon des écartements à peu près identiques vis-à-vis des surfaces de bride (6,13 ; 26).

3. Elément d'installation selon la revendication 1 ou 2, caractérisé en ce que les éléments d'écartement (5 ; 25) sont entièrement recouverts de la matière synthétique du corps (2 ; 22) sur au moins un côté de la feuille (1 ; 21).

4. Elément d'installation selon l'une des revendications 1 à 3, caractérisé en ce que les éléments d'écartement (5 ; 25) présentent des évidements (8) et/ou des renfoncements (9) comblés au moyen de la matière synthétique du corps (2 ; 22).

5. Elément d'installation selon l'une des revendications 1 à 4, caractérisé en ce que les éléments d'écartement (5 ; 25) sont conformés de manière énantiomorphe par rapport au plan de la feuille et présentent une symétrie de rotation par rapport à un axe disposé perpendiculairement au plan de la feuille.

6. Elément d'installation selon l'une des revendications 1 à 5, caractérisé en ce que les éléments d'écartement (5 ; 25) sont placés dans des évide-

Fig.1

Fig.2

Fig.3

Fig.4

FIG. 5